# FASCICULE DE BREVET EUROPEEN

(11) **EP 1 886 550 B1**
(45) Date de publication et mention de la délivrance du brevet: **29.06.2011**
(21) Numéro de dépôt: 07360037.1
(22) Date de dépôt: 08.08.2007
(51) Int. Cl.: A01G 1/06, A01G 17/00

(54) **Procédé de production de plants greffés de végétaux**
Verfahren zur Herstellung von vegetabilisch gepfropften Setzlingen
Method of producing seedlings grafted with plants

(30) Priorité: 09.08.2006 FR 0607235
(43) Date de publication de la demande: 13.02.2008
(73) Titulaire: ECOSELECTION, 68180 Horbourg Wihr (FR)
(72) Inventeur: Pelsy, Gilles, 68180 Horbourg Wihr (FR)
(74) Mandataire: Nuss, Pierre

(56) Documents cités:
- WO-A-2006/070210
- FR-A1- 2 613 581
- FR-A1- 2 743 467

## Description

La présente invention concerne le domaine de l'agriculture et plus particulièrement celui de la viticulture. Elle a pour objet un procédé de production de plants greffés de végétaux ligneux ou semi-ligneux à partir d'un porte-greffe et d'un greffon, et plus particulièrement un procédé de production de plants de vignes, de la variété vinis vitifera ainsi que les plants obtenus par la mise en oeuvre dudit procédé.

Un tel procédé est connu de FR 2 613 581.

On sait que la greffe est une opération importante pour l'agriculture et plus particulièrement pour la viticulture car elle permet une protection contre les maladies, une diversification des variétés et une adaptation de certaines espèces à des climats qui ne leur sont pas favorables a priori.

En France, la greffe est indispensable pour assurer la résistance de la vigne au phylloxéra. Tous les plants vendus et plantés dans ce pays sont ainsi des plants greffés.

Cette technique est très largement déployée dans le monde, même si certains pays possèdent encore des terres indemnes de phylloxéra les autorisant à utiliser des plants francs de pied c'est-à-dire non greffés.

Les techniques de greffe sur bois sont aujourd'hui bien maîtrisées et quasiment industrialisées avec une productivité élevée de l'ordre de 100 000 greffes/personne/an.

Les plants greffés sont d'abord cultivés en pépinières avant d'être plantés au vignoble l'année suivante.

Le cycle complet des opérations allant de la récolte du bois à la plantation du plant greffé final dans le vignoble dure environ 18 mois.

La mise au point de la culture en pots après le greffage a permis de ramener la durée de ce cycle à environ 8 mois. Le vignoble peut ainsi être planté l'année même de la greffe des plants.

Toutefois, cette technique de la greffe classique présente trois inconvénients majeurs. Elle nécessite tout d'abord une grande surface de vignoble en amont pour la production des greffons et des porte-greffes. La production de ce matériel reproducteur se déroule, de ce fait, dans les zones de production, là où les risques sanitaires sont les plus élevés.

Ensuite, le travail de greffage est inégalement réparti sur l'année, avec un pic d'activité intense au cours des mois de mars et avril.

Enfin, la greffe sur bois (également appelée « greffe bois ») ne permet pas la reproduction en très grand nombre d'un seul individu. Elle ne permet donc pas ou difficilement la mise en valeur et le développement d'un caractère intéressant porté par un pied.

C'est pour palier ces différents problèmes que la technique de la greffe dite « bouture herbacée » a été mise au point.

La greffe bouture herbacée a pour but de produire en conditions hors-sol, toute l'année, des plants greffés à partir de pieds mères en nombre réduit, avec un taux de multiplication quasiment infini.

Ceci est permis par l'utilisation de matériel végétal en croissance (tige verte et poussante) à la place de matériel en dormance (tige de bois ligneux).

Avec le recul, on constate cependant qu'il est difficile de maintenir une production tout au long de l'année.

En effet, d'une part les coûts de maintien en culture des plants l'hiver sont élevés et d'autre part, on constate une baisse importante du rendement des greffes réalisées en dehors de la période naturelle de croissance de la végétation.

Néanmoins, sous réserve d'une simplification des conditions de production et d'une meilleure fiabilité de son rendement, la greffe bouture herbacée conserve deux avantages, à savoir, d'une part l'allongement de quelques mois de la période de greffage et, d'autre part, l'obtention d'un facteur de multiplication à partir d'un seul individu de l'ordre de 2000 par an.

Le but de la présente invention est d'apporter une série de simplifications à la greffe bouture herbacée afin d'améliorer significativement son efficacité et son coût de revient. Les avantages décrits plus haut peuvent alors être totalement opérationnels et exploités.

A cet effet, la présente invention a pour objet un procédé de production de plants greffés de végétaux ligneux ou semi-ligneux à partir d'un porte-greffe et d'un greffon, caractérisé en qu'il comprend essentiellement les étapes dans lesquelles :
a) on favorise le développement des racines dudit porte-greffe en l'alimentant avec une première solution nutritive incluant au moins un facteur de croissance,
b) on insère et fixe un greffon herbacé comprenant au moins un noeud prolongé de part et d'autre par un premier et un second segment de tige herbacée sur un porte-greffe comprenant au moins deux noeuds dont l'un est disposé à l'extrémité inférieure, proche des racines, d'une tige formant le corps principal dudit porte-greffe, ladite tige portant ou étant prolongée, dans sa partie supérieure, opposée à ladite extrémité inférieure, par au moins un autre noeud prolongé par au moins un troisième segment de tige herbacée sur l'extrémité libre duquel on greffe l'extrémité libre dudit premier segment de tige herbacée qui est situé en dessous de l'au moins un noeud dudit greffon herbacé,
c) on modifie la composition de l'alimentation du porte-greffe greffé et/ou on alimente directement le greffon avec une seconde solution nutritive incluant au moins un facteur de croissance pour favoriser la prise de la greffe, en particulier du cal, pour le cas où le porte-greffe présente au moins une racine juste après l'opération de greffage susvisée,
d) on alimente directement le greffon avec une seconde solution nutritive incluant au moins un facteur de croissance pour favoriser la prise de la greffe, en particulier du cal, pour le cas où le porte-greffe ne présente pas de racine juste après l'opération de greffage susvisée,
e) on place l'ensemble obtenu à l'étape c) ou d) dans une enceinte de culture à atmosphère contrôlée dans laquelle règne une température comprise entre 15 °C et 40 °C et un taux d'humidité compris entre 70 % et 100 % jusqu'à l'obtention d'un cal de greffe remplissant substantiellement tous les interstices existant entre le porte-greffe et le greffon.

Le procédé selon l'invention permet plusieurs améliorations significatives. La première amélioration majeure permet une adaptation des conditions de culture après le greffage. Elle favorise en particulier, la survie du greffon ce qui augmente considérablement le taux de réussite des greffes.

A cette fin, un apport nutritif supplémentaire est mis à la disposition de la plante greffée, par exemple grâce à l'adjonction d'un tampon absorbant piqué à l'une des extrémités supérieure du greffon.

Dans ce tampon sont alors apportées différentes solutions nutritives et hormonales complémentaires de celles déjà fournies par le biais des diverses solutions de trempage employées au niveau des racines et du greffage préalables.

Dans les tous premiers jours après le greffage, ce tampon apporte ainsi les nutriments nécessaires à la survie du greffon avant que les racines du porte-greffe ne deviennent fonctionnelles et assurent leur rôle qui est de nourrir l'ensemble de la plante.

La présence des hormones dans le tampon, favorise le développement de cal au niveau du point de greffage et donc accélère la cicatrisation de ce dernier.

Par ailleurs, lorsque ledit tampon est placé à l'extrémité libre de la tige dudit greffon, ce dernier ralentit également fortement la dessiccation de la tige supérieure du greffon qui n'est alors plus un simple tronçon de tige coupée.

La deuxième amélioration majeure permet un raccourcissement du cycle de production.

Elle consiste à travailler sur des pousses de porte-greffes obtenues à partir de boutures bois à la place de travailler sur les tiges ou rameaux complètement verts, c'est-à-dire entièrement herbacés, de porte-greffes.

En effet, la phase de culture en serre des porte-greffes, très coûteuse, est limitée à la seule culture des boutures récoltées dans les pépinières de porte-greffes classiques.

Les avantages de l'utilisation d'une bouture racinée sont notamment :
- une réduction du temps d'incubation après la greffe, du temps d'acclimatation et plus généralement de tout le cycle de production,
- l'augmentation importante du taux de réussite du greffage qui peut atteindre les 90 %,
- la production de plants dotés d'une bonne capacité de résistance grâce aux réserves nutritives du bois, et
- une implantation dans le vignoble plus facile et plus rapide.

L'invention sera mieux comprise, grâce à la description ci-après, qui se rapporte à deux modes de réalisation préférés, donnés à titre d'exemples non limitatifs.

Le procédé de production de plants greffés de végétaux ligneux ou semi-ligneux à partir d'un porte-greffe et d'un greffon selon l'invention est caractérisé en qu'il comprend essentiellement les étapes dans lesquelles :
a) on favorise 1e développement des racines dudit porte-greffe en l'alimentant avec une première solution nutritive incluant au moins un facteur de croissance,
b) on insère et fixe un greffon herbacé comprenant au moins un noeud prolongé de part et d'autre par un premier et un second segment de tige herbacée sur un porte-greffe comprenant au moins deux noeuds dont l'un est disposé à l'extrémité inférieure, proche des racines, d'une tige formant le corps principal dudit porte-greffe, ladite tige portant ou étant prolongée, dans sa partie supérieure, opposée à ladite extrémité inférieure, par au moins un autre noeud prolongé par au moins un troisième segment de tige herbacée sur l'extrémité libre duquel on greffe l'extrémité libre dudit premier segment de tige herbacée qui est situé en dessous de l'au moins un noeud dudit greffon herbacé,
c) on modifie 1a composition de l'alimentation du porte-greffe greffé et/ou on alimente directement le greffon avec une seconde solution nutritive incluant au moins un facteur de croissance pour favoriser la prise de la greffe, en particulier du cal, pour le cas où le porte-greffe présente au moins une racine juste après l'opération de greffage susvisée,
d) on alimente directement le greffon avec une seconde solution nutritive incluant au moins un facteur de croissance pour favoriser la prise de la greffe, en particulier du cal, pour le cas où le porte-greffe ne présente pas de racine juste après l'opération de greffage susvisée,
e) on place l'ensemble obtenu à l'étape c) ou d) dans une enceinte de culture à atmosphère contrôlée dans laquelle règne une température comprise entre 15 °C et 40 °C et un taux d'humidité compris entre 70 % et 100 % jusqu'à l'obtention d'un cal de greffe remplissant substantiellement tous les interstices existant entre le porte-greffe et le greffon.

De préférence, le procédé selon l'invention est caractérisé en ce que l'on place l'ensemble obtenu à l'étape c) ou d) dans une enceinte de culture à atmosphère contrôlée dans laquelle règne une température comprise entre 20 °C et 32 °C et un taux d'humidité compris entre 75 % et 85 % jusqu'à l'obtention d'un cal de greffe parfaitement formé.

Selon un premier aspect, le procédé selon l'invention est essentiellement caractérisé en ce que l'opération de greffage de l'étape b) est réalisée avec un porte-greffe constitué par un rameau essentiellement ligneux déjà bouturé avant la réalisation de ladite greffe.

Selon un second aspect, le procédé selon l'invention est caractérisé en ce que le porte-greffe est un rameau essentiellement herbacé. Comme on le verra plus loin, ce rameau peut lui-même être raciné ou non au moment d'effectuer ladite greffe, c'est-à-dire qu'il peut présenter une ou plusieurs racines à ce moment là.

Avantageusement, le procédé selon l'invention est caractérisé en ce que l'on alimente, à l'étape c) ou d), directement le greffon avec une seconde solution nutritive par pulvérisation de cette dernière directement sur tout ou partie dudit greffon. A cette fin, tout moyen de pulvérisation habituellement utilisé en jardinage peut convenir.

Selon une première variante, on alimente, à l'étape c) ou d), directement le greffon avec une seconde solution nutritive par perfusion directe dans ledit greffon depuis au moins une canalisation et au moins un réservoir de stockage externes. Les moyens utilisés pour ce faire sont également bien connus de l'homme de métier et ne nécessitent pas plus d'explications. Ladite seconde solution peut s'écouler d'elle-même par gravité ou être entraînée par un moyen adapté, tel qu'une pompe, par exemple.

Selon une seconde variante, on alimente, à l'étape c) ou d), directement le greffon avec une seconde solution nutritive par trempage de tout ou d'une partie dudit greffon dans au moins un réservoir de seconde solution nutritive. Il suffit de placer le greffon à proximité dudit réservoir pour qu'une partie ou l'intégralité de celui-ci trempe dans ladite seconde solution.

Selon une troisième variante particulièrement intéressante et préférée, on alimente, à l'étape c) ou d), directement le greffon avec une seconde solution nutritive par aspiration par capillarité à partir d'au moins un réservoir réalisé en une matière absorbante ou poreuse imbibée et directement en contact avec ledit greffon.

De manière avantageuse, le réservoir réalisé en une matière absorbante ou poreuse est constitué par un bloc de mousse florale imbibé de ladite seconde solution nutritive et piqué directement sur l'extrémité libre du second segment de tige herbacée dudit greffon. Bien entendu, d'autres matières absorbantes synthétiques ou naturelles (coton, matière textile, roches poreuses légères...) peuvent également convenir.

Selon un mode de réalisation particulièrement préféré, le réservoir réalisé en une matière absorbante ou poreuse est constitué par un bloc de mousse florale imbibé et piqué, avant la greffe, directement sur le second segment de tige herbacée dudit greffon sur son extrémité proche du lieu d'assemblage avec le porte-greffe, ledit tampon imbibé étant ramené, après la greffe sur ledit lieu d'assemblage afin de recouvrir toute ou sensiblement toute la zone où le greffon et le porte-greffe se contactent.

Pour ce faire, il suffit à l'opérateur d'enfoncer ledit tampon assez profondément sur la tige du greffon pour que l'extrémité libre du greffon puisse être correctement raccordée au porte-greffe lors de l'opération de greffage. Dans un second temps, l'opérateur pourra ensuite recouvrir la jonction obtenue par la greffe en faisant déplacer ou coulisser à la main ledit tampon imprégné de la seconde substance nutritive de la tige sur laquelle il était embroché vers et sur ladite jonction.

Le volume de greffon augmentant significativement le volume de la tige au point de greffe, il s'ensuit une pression créée par ledit tampon sur le point de la greffe maintenant avantageusement le montage obtenu.

Cette disposition du tampon permet d'éviter l'emploi de petits ustensiles de fixation (pince à linge, etc.) qui peuvent blesser la plante ou contaminer la plaie s'ils ne sont pas correctement installés ou nettoyés.

Par un traitement stérilisant adapté au matériau du tampon (chaleur, rayonnement ou traitement chimique) on peut en outre prévoir que ce dernier soit parfaitement stérile voire puisse contenir une solution stérilisante en sa partie extérieure (film déposé au moment de la fabrication du tampon ou solution de trempage en surface) bloquant ainsi toute contamination de la plaie de taille par des pathogènes extérieurs.

Ainsi, la seconde solution nutritive contenue dans le réservoir peut être amenée et agir directement sur l'endroit même où se situe la greffe et favoriser la cicatrisation (formation du cal) tout en prévenant un desséchement de certaines portions de végétaux au niveau de cette jonction et en protégeant cette dernière des agressions physiques, chimiques, bactériologiques, etc. venant de l'extérieur.

Afin de garantir une alimentation suffisante et/ou régulière on peut en outre prévoir que ledit réservoir est réapprovisionné en seconde solution nutritive par arrosage ou trempage dès que nécessaire.

Selon une autre caractéristique, la première solution nutritive comprend au moins une hormone de croissance favorisant le développement des racines, de préférence un mélange d'hormone ANA et d'hormone AIB.

Avantageusement, la seconde solution nutritive contient au moins une substance favorisant la formation du cal de la greffe.

En particulier, la seconde solution nutritive contient en outre au moins une hormone favorisant la croissance des parties aériennes du plant greffé, notamment des feuilles et des tiges, en particulier de la cytokinine.

De façon particulièrement avantageuse, on peut encore prévoir que la seconde solution nutritive contient en outre au moins une substance élicitrice, c'est-à-dire qui stimule les défenses immunitaires de cette dernière.

De préférence, on modifie, à l'étape c) ou d), l'alimentation du porte-greffe greffé de façon à au moins compenser la consommation par le porte-greffe en substances apportées par la première solution nutritive, le cas échéant en favorisant en plus la prise de la greffe, en particulier la formation du cal.

Selon un autre aspect de l'invention, le procédé est encore caractérisé en ce que, pour l'étape c), la modification tient compte des apports par la seconde substance nutritive de sorte à favoriser au mieux le développement des racines.

Bien que le procédé selon l'invention puisse être mis en oeuvre pour un grand nombre de variétés végétales différentes, ledit procédé est en outre caractérisé en ce que le greffon appartient à la variété végétale vitis vinifera.

Dans cette partie de la description seront à présent successivement décrites un exemple de greffe dite « bouture herbacée », c'est-à-dire la greffe d'un rameau entièrement vert ou herbacé sur un autre rameau entièrement vert ou herbacé, puis un exemple de greffe d'un rameau entièrement vert ou herbacé sur un rameau ligneux (bois).

### A) Greffe bouture herbacée (également appelée greffe « vert sur vert »)

### 1) La culture du greffon

Dans cette technique, le plant mère est bouturé à partir de bois prélevé dans le vignoble, préférentiellement après les premières gelées.

Ce bois est mis à bouturer dans une chambre chaude présentant une humidité de l'air élevée (typiquement supérieure 80 %) afin de faciliter la prise des racines. Un traitement à l'eau du bois, sous la forme d'au moins un lavage ou d'au moins un trempage peut éventuellement être pratiqué au préalable, pour en améliorer l'état sanitaire.

Après un délai de 14 à 30 jours, les boutures racinées sont mises en culture sous serre dans des pots contenant un milieu de culture adapté, par exemple mélange formé de 50 % de terreau et de 50 % de tourbe.

Un palissage vertical est installé pour permettre aux parties aériennes de pousser en bon ordre (ce qui facilite la récolte) et verticalement (ce qui favorise l'allongement des entre-noeuds).

Les conditions de croissance et d'irrigation sont classiques :
- température comprise entre 20 et 25 °C,
- arrosage en fonction des besoins des plants,
- fertilisation foliaire par arrosage avec un engrais.

L'engrais choisi doit être adapté au stade de développement de la plante avec une teneur en phosphate importante juste après la prise des racines tel qu'un engrais NPK 10-52-10 et avec un apport en azote plus important pendant les phases de forte croissance tel qu'un engrais classiquement utilisé en serre du type NPK 10-10-10. Les premières récoltes de tiges herbacées sont possibles entre un et deux mois après la mise en serre.

Seules des tiges fraîches, en pleine croissance et d'un diamètre de l'ordre de 1 à 2 mm seront coupées.

La récolte des greffons s'effectue au dernier moment, juste avant l'opération de greffage.

### 2) La préparation du greffon

Le rameau précédemment récolté est rapporté dans la salle de greffage. Il est découpé en éléments comprenant au moins un noeud avec, si nécessaire, sa feuille principale et deux segments de tige herbacée situés de part et d'autre d'au moins un noeud. De préférence, le greffon vert comporte un seul noeud prolongé, de part et d'autre de deux segments de tige herbacée. La surface de l'éventuelle feuille présente au niveau d'un noeud est avantageusement réduite de 30 à 50 % en fonction des conditions d'éclairement disponibles dans la chambre climatique où s'effectuera la croissance.

Chacun de ces éléments constitue alors un greffon.

Il est recommandé de ne pas utiliser les 3 ou 4 mérithalles supérieurs dont la maturité physiologique n'est habituellement pas suffisante.

Les greffons ainsi obtenus sont maintenus humides, de préférence, par vaporisation et à l'ombre, pendant toute la durée du greffage. Ils sont alors prêts pour le greffage.

### 3) La culture du porte-greffe

Le porte-greffe est déjà présent en serre dans un mélange de culture classique de terreau-tourbe, par exemple.

On lui laisse de préférence une période de repos annuel. On lui fera alors reprendre son cycle de végétation en attendant la saison ou bien en forçant les conditions de culture de la serre si nécessaire. Il reçoit une fertilisation foliaire adaptée et équilibrée en engrais de type NPK, de préférence de type 10-10-10.

Tout comme dans la culture du greffon, les rameaux sont palissés verticalement sur des fils. Cette opération est d'autant plus importante ici que l'on veut obtenir des tiges présentant des entre-noeuds de 10 à 15 cm. En effet, la longueur d'entre-noeud est un bon indicateur de vitalité de la plante : plus l'entre-noeud est long, meilleure est l'aptitude à la greffe du rameau.

### 4) La préparation du porte-greffe

Le rameau est débité en tronçons de 15 à 30 cm de long, comportant un entre noeud au minimum, mais plutôt deux à trois dans la pratique.

La base du porte-greffe est constituée par le noeud inférieur auquel on a enlevé le bourgeon. C'est à partir de ce noeud que va s'enraciner la bouture. Au moment de la greffe, le porte-greffe entièrement herbacé ou vert peut ne pas présenter de racine.

Le sommet du porte-greffe se situe environ 3 cm au-dessus du noeud supérieur.

On enlève les bourgeons et les feuilles du second noeud et toutes les feuilles sauf une au troisième noeud ou à défaut au noeud précédent. Lorsqu'elle est présente, la surface de cette feuille est réduite de 30 à 50 %, comme pour le greffon.

Pendant toutes ces opérations, le matériel végétal est maintenu humide, par exemple, par brumisation.

### 5) Préparation du tampon nutritif du greffon

Le procédé préféré décrit ici nécessite la préparation d'un tampon nutritif destiné au greffon.

Le tampon est, par exemple, un cube de 1 cm de côté découpé dans de la mousse florale conventionnelle tel qu'on la trouve habituellement chez les fleuristes et les pépiniéristes.

Avant son utilisation, ce tampon va être mis à tremper quelques minutes dans une solution nutritive et hormonale (seconde solution nutritive au sens du procédé selon la présente invention) dont la composition massique préférée pour un litre d'eau est la suivante :
- solution d'engrais 10-52-10: 2500 mg (en brut),
- hormone AIB (acide 3-indolbutyrique): 1 mg,
- hormone ANA (acide 1-naphtalèneacétique): 1 mg,
- cytokinine BAP (benzylaminopurine): 1 mg.

On complète le volume du mélange obtenu à un litre avec de l'eau déminéralisée telle que couramment utilisée dans les laboratoires.

La concentration en substances actives de la solution nutritive, son type et l'équilibre entre les différentes hormones sont définis et ajustés au cas par cas, en fonction de la végétation, de la période de l'année et du matériel dont dispose l'opérateur. Par exemple, l'augmentation des quantités d'hormones AIB et ANA favorise le développement des racines alors que l'augmentation de la dose de cytokinine contribue à une meilleure formation du cal au niveau de la greffe. Dans tous les cas, l'équilibre entre les différentes hormones est aussi important que leurs concentrations en valeur absolue.

Cette solution doit être conservée au froid pendant 24 heures.

Dans un mode de réalisation particulièrement avantageux, ce tampon imbibé de solution nutritive et hormonale est placé au sommet du greffon, juste après la greffe.

Son rôle est d'une part, de ralentir la dessiccation du greffon et de le nourrir en attendant que les racines du porte-greffe soient fonctionnelles et prennent le relais, et d'autre part, d'assurer un équilibre hormonal au niveau du point de greffage pour favoriser la formation de cal.

### 6) Préparation des pots recevant les plants greffés

Les pots destinés à recevoir les jeunes plants greffés sont remplis d'un milieu de culture adapté, par exemple constitué du mélange terreau-tourbe habituel.

Juste avant l'utilisation, ils sont mis à tremper dans un bac contenant la première solution nutritive au sens du procédé selon l'invention (environ 1 litre de solution pour 15 pots). Cette solution va imprégner par capillarité le substrat des pots.

Cette première solution de trempage est constituée en poids de :
- solution d'engrais 10-52-10 : 2500 mg (en brut),
- hormone AIB : 0,05 mg à 5 mg, de préférence 1,6 mg,
- hormone ANA : 0,05 mg à 5 mg, de préférence 1 mg.

On complète le volume du mélange obtenu à un litre avec de l'eau déminéralisée telle que couramment utilisée dans les laboratoires.

Les pots sont retirés du trempage après avoir reçu les plants greffés.

### 7) Préparation du chantier de greffage

Pour procéder au greffage, on se munira de préférence des instruments suivants : pinces à linge, machine à greffer en vert, par exemple selon le brevet français FR 86 01117, scalpel, récipient contenant de l'hormone AIB pure ou faiblement diluée (avec un facteur de dilution de 2), pots en cours de trempage, porte-greffes préparés, greffons préparés et tampons nutritifs pour greffons imbibés.

Bien entendu, la greffe peut également être totalement réalisée à la main avec le matériel correspondant.

### 8) L'opération de greffe proprement dite

On réalise une fente dans le porte-greffe au-dessus du noeud portant la feuille, ou si aucune feuille n'est présente, dans le segment de tige libre proche du noeud du côté du bourgeon. Ceci peut être fait à la machine ou à la main à l'aide d'un scalpel.

A la main on coupe en biseau le greffon à environ 1,5 cm en dessous de l'oeil (ou noeud).

On insère la pointe du greffon taillé dans la fente précédemment pratiquée dans le porte-greffe.

Pour maintenir l'ensemble, on serre la zone de contact avec une petite pince à linge. D'autres moyens de maintien peuvent également convenir (ruban adhésif, fil de fer, clips...).

Optionnellement, le bas de la tige du porte-greffe est trempé pendant environ 2 à 20 secondes dans un mélange plus ou moins concentré d'hormones favorisant la croissance des racines (première solution au sens du présent brevet). Il va de soi que ce traitement, par exemple par trempage peut également être réalisé avec plusieurs « premières » solutions, par exemple avec une succession de bains plus ou moins concentrés.

Le jeune plant greffé est ensuite planté dans un pot dont on tasse bien le terreau autour du pied.

On pique alors un tampon imbibé de solution nutritive et hormonale au sommet de la tige du greffon coupée à environ 3 cm du noeud.

Le pot ainsi préparé est transféré en chambre climatique pour incubation.

La demande de brevet FR 2 613 581 A1 du 8 avril 1987 décrit les conditions d'un procédé de bouture herbacée qui peuvent être adaptées ou reprises pour le procédé de greffage selon la présente invention.

### 9) Elevage et mode de culture

La période d'incubation dans la chambre climatique va être conduite en conditions chaudes et humides :
- humidité comprise entre 75 et 90 %,
- température maintenue entre 25 et 30 °C,
- éclairage équivalent à la lumière du jour avec une alternance jour et nuit (de 8 à 10 h) régulière,
- arrosage en pluie fine toutes les 3 heures le jour et toutes les 5 heures la nuit.

Toutefois, tout arrosage permettant de maintenir la végétation légèrement humide mais sans excès conviendra également.

Aucune fertilisation n'est requise à ce stade du développement, compte tenu du trempage préalable du pot dans le bain de solution nutritive.

Cette période d'incubation va durer généralement de 14 à 15 jours, jusqu'à l'apparition des premières racines et des bourgeons supérieurs. Le tampon nutritif sommital peut alors être enlevé du greffon susvisé et le pot peut alors être transporté dans une serre classique.

La culture de la jeune greffe est alors conduite dans des conditions beaucoup moins contraignantes :
- humidité comprise entre 50 et 70 %,
- température de l'ordre de 22 à 26 °C,
- éclairage : les greffes sont protégées du soleil, surtout en période estivale, par exemple par des filets d'ombrage.

Ce passage en serre va également durer une quinzaine de jours, jusqu'au développement de 4 feuilles au-dessus du greffon.

Ensuite, les plants vont vivre une phase d'acclimatation à l'extérieur ou à l'intérieur selon l'époque. Elle doit permettre à la plante de s'adapter aux conditions extérieures de pluie, de vent,...

Entre 15 et 30 jours peuvent être nécessaires pour mener à bien cette phase de transition et obtenir des plants capables d'affronter les conditions extérieures sans problèmes.

La plantation au vignoble peut enfin avoir lieu.

### B) Greffe bouture bois (également appelée greffe « vert sur bois »)

La technique précédente peut encore être améliorée en pratiquant la greffe d'un rameau vert (ou entièrement herbacé) sur une pousse de bois.

### 1) Le greffon

La culture et la préparation du greffon sont identiques à celles décrites dans la partie A) ci-dessus.

### 2) Le porte-greffe

Dans ce cas, on utilise comme source de porte-greffe, des boutures droites greffables achetées dans le commerce. Il s'agit du matériel classique des pépiniéristes.

On découpe ces boutures en tronçons de 20 à 30 cm, comportant, par exemple 2 à 3 noeuds.

Ces éléments sont mis à tremper dans une solution commerciale d'hormone AIB, contenant 0,16 g/l d'AIB, pendant 2 heures (première solution nutritive au sens du procédé selon la présente invention).

Après avoir été égouttées, les boutures sont plantées dans des pots que l'on place en chambre chaude jusqu'à la prise des racines.

Ensuite le développement des parties aériennes se déroule en serre dans des conditions standard de croissance, avec un arrosage suffisant et une fertilisation foliaire riche en phosphate.

Le porte-greffe est prêt lorsque la pousse atteint 10 à 20 cm.

### 3) Préparation du tampon nutritif

Comme dans le cas de la greffe herbacée précitée, le greffon reçoit après le greffage un tampon nutritif.

La préparation de ce tampon est la même que celle présentée dans la partie A) susvisée. Toutefois, la formulation de la solution nutritive et hormonale dudit tampon (seconde solution nutritive au sens du procédé selon la présente invention) est, de préférence, un peu modifiée. Elle est la suivante :
- solution d'engrais 10-52-10 : 2500 mg (en brut),
- hormone AIB : 0,05 mg à 5 mg, de préférence 1,7 mg,
- hormone ANA : 0,05 mg à 5 mg, de préférence 1 mg,
- cytokinine : 1 mg.

On complète également le volume du mélange obtenu à un litre d'eau déminéralisée.

### 4) Préparation des pots

Dans ce cas étant donné que les plants sont déjà enracinés, on ne procède pas à l'opération de trempage des pots dans un bain nutritif.

### 5) Préparation du chantier de greffage

Pour procéder au greffage, on utilisera un matériel identique ou similaire à celui décrit dans le procédé de la partie A).

### 6) L'opération de greffe proprement dite

La greffe est de préférence réalisée essentiellement à la main. Dans un premier temps, on raccourcit à environ 2 cm, la tige herbacée (verte) en phase de croissance du porte-greffe bois raciné sur laquelle on va réaliser la greffe. Ensuite on pratique dans cette tige une incision droite au scalpel. Puis on insère dans cette fente le greffon taillé en biseau à la main ou à la machine.

Pour maintenir l'ensemble, on utilise une petite pince à linge pour serrer la zone de contact entre le greffon et le porte-greffe.

Un tampon imbibé de solution nutritive et hormonale est placée au sommet de la tige du greffon.

Le pot peut alors être placé en chambre climatique.

### 7) Elevage et mode de culture

La période d'incubation en chambre climatique chaude ne va durer dans ce cas qu'une huitaine de jours jusqu'à l'apparition du premier bourgeon. Les conditions sont identiques ou similaires à celles décrites pour le procédé A) susmentionné.

Le plant est ensuite transféré en serre de culture pour 8 à 15 jours jusqu'à l'apparition de 4 feuilles au-dessus du greffon.

La phase d'acclimatation du plant aux conditions extérieures est alors lancée pour une durée allant de 8 à 15 jours.

Ensuite, le plant est apte à être replanté dans le vignoble.

L'apport d'une seconde solution nutritive, par exemple via un tampon imbibé d'une solution nutritive et hormonale fiabilise la reprise du greffon et est efficace pour la greffe bouture herbacée comme pour la greffe bouture bois.

Ses avantages principaux sont :
- il facilite la survie indépendante du greffon en attendant que le porte-greffe développe ses racines et soit en mesure de nourrir le dit greffon,
- il permet d'ajuster l'équilibre hormonal du greffon indépendamment de celui des racines. Il est ainsi possible d'ajouter des hormones plus spécifiquement favorables à la fabrication de cal pour accélérer le processus de cicatrisation du point de greffage,
- il prévient le dessèchement du greffon, le niveau d'humidité à maintenir dans la chambre de culture après le greffage pouvant ainsi être sensiblement réduit. Ceci a pour conséquence positive supplémentaire de limiter les attaques fongiques.

L'utilisation de bouture bois bourgeonnante permet de réduire d'une part, la durée du cycle de production et d'autre part, l'investissement de base grâce, notamment à des besoins de surfaces de serres moindres.

En effet, la bouture bois étant achetée dans le commerce, elle n'est plus produite sous serre in situ. De plus, elle est disponible toute l'année car elle peut être stockée au froid.

Le porte-greffe est dans ce cas dans une phase de croissance forte. Il est raciné et peut nourrir le greffon plus rapidement. La reprise de la pousse est ainsi facilitée, le cycle de production est raccourci d'autant et le taux de réussite du greffage considérablement augmenté.

La bouture bois a l'avantage de posséder des réserves nutritives dans le bois que le plant peut mobiliser pour faire face aux conditions de croissance en plein champ. Le plant est alors plus robuste et peut être sorti plus tôt.

Bien entendu, l'invention n'est pas limitée aux modes de réalisation décrits. Des modifications restent possibles, notamment du point de vue de la constitution des divers éléments ou par substitution d'équivalents techniques, sans sortir pour autant du domaine de protection de l'invention, tel que défini par les revendications.

## Revendications

1. Procédé de production de plants greffés de végétaux ligneux ou semi-ligneux à partir d'un porte-greffe et d'un greffon, **caractérisé en qu'**il comprend essentiellement les étapes dans lesquelles :
a) on favorise le développement des racines dudit porte-greffe en l'alimentant avec une première solution nutritive incluant au moins un facteur de croissance,
b) on insère et fixe un greffon herbacé comprenant au moins un noeud prolongé de part et d'autre par un premier et un second segment de tige herbacée sur un porte-greffe comprenant au moins deux noeuds dont l'un est disposé à l'extrémité inférieure, proche des racines, d'une tige formant le corps principal dudit porte-greffe, ladite tige portant ou étant prolongée, dans sa partie supérieure, opposée à ladite extrémité inférieure, par au moins un autre noeud prolongé par au moins un troisième segment de tige herbacée sur l'extrémité libre duquel on greffe l'extrémité libre dudit premier segment de tige herbacée qui est situé en dessous de l'au moins un noeud dudit greffon herbacé,
c) on modifie la composition de l'alimentation du porte-greffe greffé et/ou on alimente directement le greffon avec une seconde solution nutritive incluant au moins un facteur de croissance pour favoriser la prise de la greffe, en particulier du cal, pour le cas où le porte-greffe présente au moins une racine juste après l'opération de greffage susvisée,
d) on alimente directement le greffon avec une seconde solution nutritive incluant au moins un facteur de croissance pour favoriser la prise de la greffe, en particulier du cal, pour le cas où le porte-greffe ne présente pas de racine juste après l'opération de greffage susvisée,
e) on place l'ensemble obtenu à l'étape c) ou d) dans une enceinte de culture à atmosphère contrôlée dans laquelle règne une température comprise entre 15 °C et 40 °C et un taux d'humidité compris entre 70 % et 100 % jusqu'à l'obtention d'un cal de greffe remplissant substantiellement tous les interstices existant entre le porte-greffe et le greffon.

2. Procédé selon la revendication 1, **caractérisé en ce que** l'on place l'ensemble obtenu à l'étape c) ou d) dans une enceinte de culture à atmosphère contrôlée dans laquelle règne une température comprise entre 20 °C et 32 °C et un taux d'humidité compris entre 75 % et 85 % jusqu'à l'obtention d'un cal de greffe parfaitement formé.

3. Procédé selon la revendication 1 ou 2, **caractérisé en ce que** l'opération de greffage de l'étape b) est réalisée avec un porte-greffe constitué par un rameau essentiellement ligneux déjà bouturé avant l'opération de ladite greffe.

4. Procédé selon la revendication 1 ou 2, **caractérisé en ce que** l'étape de greffage de l'étape b) est réalisée avec un porte-greffe constitué par un rameau essentiellement herbacé.

5. Procédé selon l'une quelconque des revendications 1 à 4, **caractérisé en ce qu'**on alimente, à l'étape c) ou d), directement le greffon avec une seconde solution nutritive par pulvérisation de cette dernière directement sur tout ou partie dudit greffon.

6. Procédé selon l'une quelconque des revendications 1 à 4, **caractérisé en ce qu'**on alimente, à l'étape c) ou d), directement le greffon avec une seconde solution nutritive par perfusion directe dans ledit greffon depuis au moins une canalisation et au moins un réservoir de stockage externes.

7. Procédé selon l'une quelconque des revendications 1 à 4, **caractérisé en ce qu'**on alimente, à l'étape c) ou d), directement le greffon avec une seconde solution nutritive par trempage de tout ou d'une partie dudit greffon dans au moins un réservoir de seconde solution nutritive.

8. Procédé selon l'une quelconque des revendications 1 à 4, **caractérisé en ce qu'**on alimente, à l'étape c) ou d), directement le greffon avec une seconde solution nutritive par aspiration par capillarité à partir d'au moins un réservoir réalisé en une matière absorbante ou poreuse imbibée et directement en contact avec ledit greffon.

9. Procédé selon la revendication 8, **caractérisé en ce que** le réservoir réalisé en une matière absorbante ou poreuse est constitué par un bloc de mousse florale imbibé de ladite seconde solution nutritive et piqué directement sur l'extrémité libre du second segment de tige herbacée dudit greffon.

10. Procédé selon la revendication 8, **caractérisé en ce que** le réservoir réalisé en une matière absorbante ou poreuse est constitué par un bloc de mousse florale imbibé et piqué, avant la greffe, directement sur le second segment de tige herbacée dudit greffon sur son extrémité proche du lieu d'assemblage avec le porte-greffe, ledit tampon imbibé étant ramené, après la greffe sur ledit lieu d'assemblage afin de recouvrir toute ou sensiblement toute la zone où le greffon et le porte-greffe se contactent.

11. Procédé selon la revendication 9 ou 10, **caractérisé en ce que** ledit réservoir est réapprovisionné en seconde solution nutritive par arrosage ou trempage.

12. Procédé selon l'une quelconque des revendications 1 à 11, **caractérisé en ce que** la première solution nutritive comprend au moins une hormone de croissance favorisant le développement des racines, de préférence un mélange d'hormone ANA et d'hormone AIB.

13. Procédé selon l'une quelconque des revendications 1 à 12, **caractérisé en ce que** la seconde solution nutritive contient au moins une substance favorisant la formation du cal de la greffe.

14. Procédé selon la revendication 13, **caractérisé en ce que** la seconde solution nutritive contient en outre au moins une hormone favorisant la croissance des parties aériennes du plant greffé, notamment des feuilles et des tiges, en particulier de la cytokinine.

15. Procédé selon la revendication 13 ou 14, **caractérisé en ce que** la seconde solution nutritive contient en outre au moins une substance élicitrice.

16. Procédé selon l'une quelconque des revendications 1 à 15, **caractérisé en ce que** l'on modifie, à l'étape c) ou d), l'alimentation du porte-greffe greffé de façon à au moins compenser la consommation par le porte-greffe en substances apportées par la première solution nutritive, le cas échéant, en favorisant en plus la prise de la greffe, en particulier la formation du cal.

17. Procédé selon la revendication 16, **caractérisé en ce que**, pour l'étape c), la modification tient compte des apports par la seconde substance nutritive de sorte à favoriser au mieux le développement des racines.

18. Procédé selon l'une quelconque des revendications 1 à 17, **caractérisé en ce que** le greffon appartient à la variété végétale vitis vinifera.

## Claims

1. Method for the production of grafted plants of woody or semi-woody plants from a rootstock and a graft, **characterised in that** it comprises essentially steps in which:
a) the development of the roots of said rootstock is encouraged by feeding it with a first nutritional solution which includes at least one growth factor,
b) a herbaceous graft comprising at least one node extended on either side by a first and a second segment of herbaceous stem is inserted and fixed onto a rootstock comprising at least two nodes, one of which is disposed at the lower end, close to the roots, of a stem forming the main body of said rootstock, said stem supporting or being extended, in its upper part, opposite the said lower end, by at least one other node extended by at least one third segment of herbaceous stem onto the free end of which the free end of said first segment of herbaceous stem is grafted, which is located below the at least one node of said herbaceous graft,
c) the composition of the food to the grafted rootstock is modified and/or the graft is fed directly with a second nutritional solution including at least one growth factor to encourage the taking of the graft, in particular of the callus, when the rootstock has at least one root just after the operation of the aforementioned grafting,
d) the graft is fed directly with a second nutritional solution including a least one growth factor to encourage the taking of the graft, in particular of the callous, when the rootstock does not have a root just after the operation of the aforementioned grafting,
e) the assembly obtained in stage c) or d) is placed into a culture enclosure with a controlled atmosphere in which the temperature is between 15°C and 40°C and the humidity is between 70% and 100% until a graft callous is obtained which fills substantially all of the gaps between the rootstock and the graft.

2. Method according to claim 1, **characterised in that** the assembly obtained in stage c) or d) is placed into a culture enclosure with a controlled atmosphere in which the temperature is between 20°C and 32°C and the humidity is between 75% and 85% until a perfectly formed graft callous is obtained.

3. Method according to claim 1 or 2, **characterised in that** the grafting operation in stage b) is performed with a rootstock formed by an essentially woody branch from which a cutting has already been taken prior to the operation of grafting.

4. Method according to claim 1 or 2, **characterised in that** the grafting step of step b) is performed with a rootstock formed by an essentially herbaceous branch.

5. Method according to any one of claims 1 to 4, **characterised in that** the graft is fed in stage c) or d) with a second nutritional solution by spraying the latter directly onto all or part of said graft.

6. Method according to any one of claims 1 to 4, **characterised in that** the graft is fed directly in stage c) or d) with a second nutritional solution by direct perfusion into said graft from at least one conduit and at least one external storage reservoir.

7. Method according to any one of claims 1 to 4, **characterised in that** the graft is fed directly in step c) or d) with a second nutritional solution by soaking all or part of said graft in at least one reservoir of a second nutritional solution.

8. Method according to any one of claims 1 to 4, **characterised in that** the graft is fed directly in step c) or d) with a second nutritional solution by capillary action from at least one reservoir made from an absorbent or porous impregnated material which is in direct contact with said graft.

9. Method according to claim 8, **characterised in that** the reservoir, which is made from an absorbent or porous material, is formed by a block of floristry oasis foam impregnated with a second nutritional solution and pricked directly at the free end of the second segment of herbaceous stem of said graft.

10. Method according to claim 8, **characterised in that** the reservoir, which is made from an absorbent or porous material, is formed by a block of impregnated and pricked floristry oasis foam, before grafting, directly on the second segment of herbaceous stem of said graft at its end close to the site of assembly with the rootstock, said impregnated plug being moved after grafting onto said assembly site in order to cover all or almost all of the area where the graft and the rootstock are in contact.

11. Method according to claim 9 or 10, **characterised in that** the said reservoir is replenished with a second nutritional solution by watering or soaking.

12. Method according to any one of claims 1 to 11, **characterised in that** the first nutritional solution comprises at least one growth hormone encouraging the development of roots, preferably a mixture of NAA hormone and IBA hormone.

13. Method according to any one of claims 1 to 12, **characterised in that** the second nutritional solution contains at least one substance encouraging the formation of the graft callous.

14. Method according to claim 13, **characterised in that** the second nutritional solution also contains at least one hormone encouraging the growth of the aerial parts of the grafted plant, in particular the leaves and the stems, in particular cytokinin.

15. Method according to claim 13 or 14, **characterised in that** the second nutritional solution also contains at least one elicitor substance.

16. Method according to any one of claims 1 to 15, **characterised in that** the feeding of the grafted rootstock in stage c) or d) is modified so as to compensate at least the consumption by the rootstock of substances introduced via the first nutritional solution, if necessary, further encouraging the taking of the graft, in particular the formation of a callous.

17. Method according to claim, 16, **characterised in that** for stage c) the modification takes account of the contributions of the second nutritional substance so as to best encourage the development of roots.

18. Method according to any one of claims 1 to 17, **characterised in that** the graft belongs to the plant variety *vitis vinifera*.

## Patentansprüche

1. Verfahren zur Erzeugung veredelter oder gepfropfter Setzlinge holziger oder halb-holziger Pflanzen aus einer Unterlage und einem Edelreis oder Pfropfreis, **dadurch gekennzeichnet, dass** es im Wesentlichen die Schritte umfasst in denen
a) die Entwicklung der Wurzeln der genannten Unterlage gefördert wird, indem sie mit einer ersten Nährlösung versorgt wird, die mindestens einen Wachstumsfaktor enthält,
b) ein krautiges Edelreis oder Pfropfreis, das mindestens einen Knoten umfasst, der sich beiderseits in einem ersten und einem zweiten krautigen Stielabschnitt fortsetzt, in eine Unterlage eingefügt und befestigt wird, die über mindestens zwei Knoten verfügt, von denen der eine am unteren Ende, nahe den Wurzeln, eines Stieles angeordnet ist, der den Hauptkörper der genannten Unterlage bildet, wobei der genannte Stiel in seinem oberen, dem genannten unteren Ende entgegengesetzten Teil mindestens einen weiteren Knoten aufweist oder sich darin fortsetzt, der sich in mindestens einem dritten krautigen Stielabschnitt fortsetzt, auf dessen freies Ende das freie Ende des genannten ersten krautigen Stielabschnittes gepfropft wird, der sich unterhalb des mindestens einen Knotens des genannten krautigen Reises befindet,
c) die Zusammensetzung der Nährlösung der gepfropften Unterlage geändert und/oder das Reis direkt mit einer zweiten Nährlösung versorgt wird, die mindestens einen Wachstumsfaktor zur Förderung des Anwachsens des Reises enthält, insbesondere des Kallus, in dem Fall dass die Unterlage unmittelbar nach der oben genannten Pfropfung mindestens eine Wurzel aufweist,
d) das Reis direkt mit einer zweiten Nährlösung versorgt wird, die mindestens einen Wachstumsfaktor zur Förderung des Anwachsens des Reises enthält, insbesondere des Kallus, in dem Fall, dass die Unterlage unmittelbar nach der oben genannten Pfropfung keine Wurzel aufweist,
e) die in Schritt c) oder d) erhaltene Einheit in einen Anzuchtraum mit kontrollierter Atmosphäre gesetzt wird, in dem eine Temperatur zwischen 15°C und 40°C und eine Luftfeuchtigkeit zwischen 70 % und 100 % herrscht, bis ein Pfropfkallus erhalten wird, der im Wesentlichen alle Zwischenräume zwischen der Unterlage und dem Reis ausfüllt.

2. Verfahren nach Patentanspruch 1, **dadurch gekennzeichnet, dass** die in Schritt c) oder d) erhaltene Einheit in einen Anzuchtraum mit kontrollierter Atmosphäre gesetzt wird, in dem eine Temperatur zwischen 20°C und 32°C und eine Luftfeuchtigkeit zwischen 75 % und 85 % herrscht, bis ein vollkommen ausgebildeter Pfropfkallus erhalten wird.

3. Verfahren nach Patentanspruch 1 oder 2, **dadurch gekennzeichnet, dass** der Pfropfvorgang des Schrittes b) auf einer Unterlage erfolgt, die aus einem im Wesentlichen holzigen Zweig besteht, der bereits vor der genannten Pfropfung als Setzling vermehrt wurde.

4. Verfahren nach Patentanspruch 1 oder 2, **dadurch gekennzeichnet, dass** der Pfropfvorgang des Schrittes b) auf einer Unterlage erfolgt, die aus einem im Wesentlichen krautigen Zweig besteht.

5. Verfahren nach einem der Patentansprüche 1 bis 4, **dadurch gekennzeichnet, dass** das Reis in Schritt c) oder d) direkt mit einer zweiten Nährlösung versorgt wird, indem diese direkt auf den ganzen oder einen Teil des genannten Reises gesprüht wird.

6. Verfahren nach einem der Patentansprüche 1 bis 4, **dadurch gekennzeichnet, dass** das Reis in Schritt c) oder d) direkt mit einer zweiten Nährlösung versorgt wird, indem sie direkt per Perfusion aus mindestens einer Leitung und mindestens einem externen Vorratsbehälter in das genannte Reis geleitet wird.

7. Verfahren nach einem der Patentansprüche 1 bis 4, **dadurch gekennzeichnet, dass** das Reis in Schritt c) oder d) direkt mit einer zweiten Nährlösung versorgt wird, indem das ganze oder ein Teil des genannten Reises in mindestens einen Behälter mit der zweiten Nährlösung eingetaucht wird.

8. Verfahren nach einem der Patentansprüche 1 bis 4, **dadurch gekennzeichnet, dass** das Reis in Schritt c) oder d) durch kapillares Ansaugen aus mindestens einem Vorratsspeicher direkt mit einer zweiten Nährlösung versorgt wird, der aus einem getränkten, absorbierenden oder porösen Werkstoff besteht, der mit dem genannten Reis in unmittelbarer Berührung steht.

9. Verfahren nach Patentanspruch 8, **dadurch gekennzeichnet, dass** der aus einem absorbierenden oder porösen Werkstoff bestehende Vorratsspeicher ein Block aus Steckschaum ist, der mit der genannten zweiten Nährlösung getränkt ist und direkt auf das freie Ende des zweiten krautigen Stielabschnittes des genannten Reises gesteckt wird.

10. Verfahren nach Patentanspruch 8, **dadurch gekennzeichnet, dass** der aus einem absorbierenden oder porösen Werkstoff bestehende Vorratsspeicher ein Block aus Steckschaum ist, der getränkt ist und vor dem Pfropfen direkt auf den zweiten krautigen Stielabschnitt des genannten Reises, und zwar auf dessen der Verbindungsstelle mit der Unterlage nahes Ende gesteckt wurde, wobei das genannte getränkte Kissen nach dem Pfropfen an die genannte Verbindungsstelle gebracht wird, um den gesamten oder im Wesentlichen den gesamten Abschnitt zu bedecken, in dem das Reis und die Unterlage miteinander in Berührung stehen.

11. Verfahren nach Patentanspruch 9 oder 10, **dadurch gekennzeichnet, dass** der genannte Vorratsspeicher durch Gießen oder Eintauchen wieder mit der zweiten Nährlösung versorgt wird.

12. Verfahren nach einem der Patentansprüche 1 bis 11, **dadurch gekennzeichnet, dass** die erste Nährlösung mindestens ein Wachstumshormon enthält, das die Bildung der Wurzeln fördert, vorzugsweise ein Gemisch aus den Hormonen NAA und IBA.

13. Verfahren nach einem der Patentansprüche 1 bis 12, **dadurch gekennzeichnet, dass** die zweite Nährlösung mindestens einen Stoff enthält, der die Kallusbildung des Reises fördert.

14. Verfahren nach Patentanspruch 13, **dadurch gekennzeichnet, dass** die zweite Nährlösung außerdem mindestens ein Hormon enthält, das das Wachstum der oberirdischen Teile des gepfropften Setzlings fördert, insbesondere das der Blätter und Stiele, insbesondere Zytokinin.

15. Verfahren nach Patentanspruch 13 oder 14, **dadurch gekennzeichnet, dass** die zweite Nährlösung außerdem mindestens einen Elicitor enthält.

16. Verfahren nach einem der Patentansprüche 1 bis 15, **dadurch gekennzeichnet, dass** in Schritt c) oder d) die Versorgung der gepfropften Unterlage derart geändert wird, dass mindestens der Verbrauch der Unterlage von Stoffen, die durch die erste Nährlösung bereitgestellt wurden, ausgeglichen wird, wobei gegebenenfalls außerdem das Anwachsen des Reises und insbesondere die Kallusbildung gefördert wird.

17. Verfahren nach Patentanspruch 16, **dadurch gekennzeichnet, dass** die Änderung in Schritt c) die Zusätze durch die zweite Nährlösung derart berücksichtigt, dass die Wurzelbildung möglichst stark gefördert wird.

18. Verfahren nach einem der Patentansprüche 1 bis 17, **dadurch gekennzeichnet, dass** das Reis der Pflanzenvarietät vitis vinifera angehört.
